(19) Europäisches Patentamt
European Patent Office
Office européen des brevets

(11) EP 0 974 872 A2

(12) # EUROPÄISCHE PATENTANMELDUNG

(43) Veröffentlichungstag:
**26.01.2000 Patentblatt 2000/04**

(51) Int. Cl.[7]: **G03G 9/09**, G03G 9/097, C09D 5/03, C09D 4/00

(21) Anmeldenummer: **99112874.5**

(22) Anmeldetag: **03.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.07.1998 DE 19832371**

(71) Anmelder: **Clariant GmbH**
**65929 Frankfurt am Main (DE)**

(72) Erfinder:
- **Macholdt, Hans-Tobias, Dr.**
**64297 Darmstadt (DE)**
- **Baur, Rüdiger, Dr.**
**65817 Eppstein (DE)**

(54) **Verwendung von Aluminium-Azokomplexfarbstoffen als Ladungssteuermittel**

(57) Aluminium-Azokomplexfarbstoffe der Formel (I) oder (I')

EP 0 974 872 A2

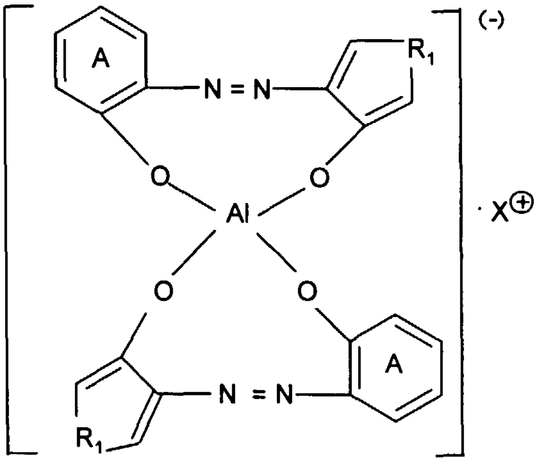

(I)

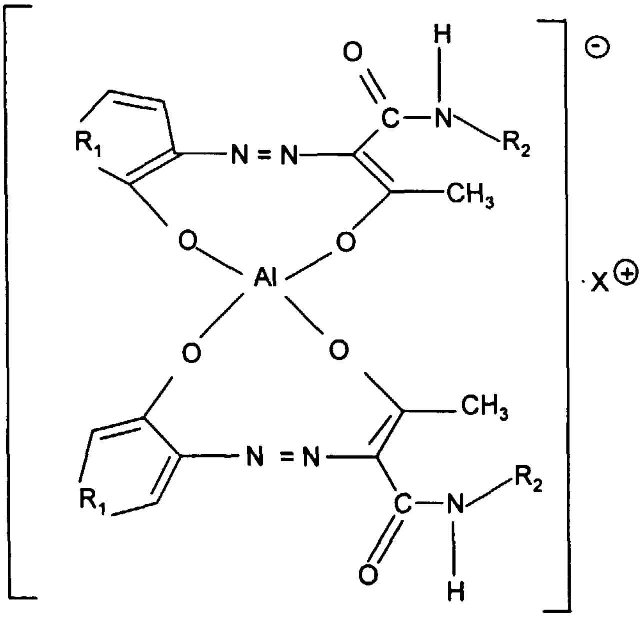

(I'),

werden als Ladungssteuermittel in elektrophotographischen Tonern und Entwicklern, Pulverlacken, Elektretmaterialien, Farbfiltern, elektrostatischen Trennverfahren und in Ink-Jet-Tinten verwendet.

## Beschreibung

Die vorliegende Erfindung liegt auf dem technischen Gebiet der Ladungssteuermittel in Tonern und Entwicklern für elektrophotographische Aufzeichnungsverfahren, in Pulvern und Pulverlacken zur Oberflächenbeschichtung, in Elektretmaterialien, insbesondere in Elektretfasern, in Trennvorgängen und in Farbfiltern.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z. B. Magnettoner, Flüssigtoner oder Polymerisationstoner im Einsatz. Unter Polymerisationstonern sind solche Toner zu verstehen, die z. B. durch Suspensionspolymerisation (Kondensation) oder Emulsionspolymerisation entstehen und zu verbesserten Teilcheneigenschaften des Toners führen. Weiterhin sind auch solche Toner gemeint, die grundsätzlich in nicht-wäßrigen Dispersionen erzeugt werden.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüber hinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Da Tonerbindemittel in der Regel eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen.

Ladungssteuermittel, die nicht verhindern können, daß der Toner oder Entwickler bei längerer Gebrauchsdauer eine hohe Ladungsdrift zeigt (Alterung), die sogar bewirken kann, daß der Toner oder Entwickler eine Ladungsumkehr erfährt, sind daher für die Praxis ungeeignet.

Darüber hinaus ist für die Praxis wichtig, daß die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C von großem Vorteil. Wichtig ist auch, daß die Thermostabilität über einen längeren Zeitraum (ca. 30 Minuten) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, sowie Cycloolefincopolymere, einzeln oder in Kombination, die noch weitere Inhaltsstoffe, z. B. Farbmittel, wie Farbstoffe und Pigmente, Wachse oder Fließhilfsmittel, enthalten können oder im Nachhinein zugesetzt bekommen können, wie hochdisperse Kieselsäuren.

Für eine gute Dispergierbarkeit ist es von großem Vorteil, wenn das Ladungssteuermittel möglichst keine wachsartigen Eigenschaften, keine Klebrigkeit und einen Schmelz- oder Erweichungspunkt von > 150 °C, besser > 200 °C, aufweist. Eine Klebrigkeit führt häufig zu Problemen beim Zudosieren in die Tonerformulierung, und niedrige Schmelz- oder Erweichungspunkte können dazu führen, daß beim Eindispergieren keine homogene Verteilung erreicht wird, da sich das Material tröpfchenförmig im Trägermaterial zusammenschließt.

Außer in elektrophotographischen Tonern und Entwicklern können Ladungssteuermittel auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Gegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:

Beim Corona-Verfahren wird der Pulverlack oder das Pulver an einer geladenen Corona vorbeigeführt und hierbei aufgeladen, beim triboelektrischen oder elektrokinetischen Verfahren wird vom Prinzip der Reibungselektrizität Gebrauch gemacht.

Der Pulverlack oder das Pulver erhält im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Auch eine Kombination von beiden Verfahren ist möglich. Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüber hinaus ist gefunden worden, daß Ladungssteuermittel das Aufladungs- sowie das Ladungsstabilitätsverhalten von Elektretmaterialien, insbesondere Elektretfasern, erheblich verbessern können (DE-A-43 21 289). Elektretfasern sind bisher hauptsächlich im Zusammenhang mit dem Problem der Feinststaubfiltration beschrieben worden. Die beschriebenen Filtermaterialien unterscheiden sich sowohl hinsichtlich der Materialien, aus denen die Fasern bestehen als auch bezüglich der Art und Weise, wie die elektrostatische Ladung auf die Fasern aufgebracht wird. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung auf unterschiedliche Weise erhalten, nämlich durch Corona- oder Triboaufladung.

Weiterhin ist bekannt, daß Ladungssteuermittel in elektrostatischen Trennvorgängen, insbesondere in Trennvorgängen von Polymeren verwendet werden können. So beschreiben Y. Higashiyama et al. (J. Electrostatics 30, pp 203 - 212 (1993)) am Beispiel des äußerlich aufgebrachten Ladungssteuermittels Trimethyl-phenyl-ammonium-tetraphenylborat, wie Polymere für Recyclingzwecke voneinander getrennt werden können. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel kann auch grundsätzlich an eine Einarbeitung derselben in das Polymer gedacht werden, um beispielsweise ein Polymer innerhalb der triboelektrischen Spannungsreihe zu verschieben und eine entsprechende Trennwirkung zu erhalten. Ebenso lassen sich auf diese Weise andere Polymere wie z. B. Polypropylen (PP) und/oder Polyethylenterephthalat (PET) und/oder Polyvinylchlorid (PVC) voneinander trennen.

Ebenso lassen sich auch z. B. Salzmineralien besonders gut selektiv trennen, wenn ihnen zuvor ein Oberflächenzusatz zugegeben wurde (Oberflächenkonditionierung), der die substratspezifische elektrostatische Aufladung verbessert (A. Singewald, L. Ernst, Zeitschrift für Physikal. Chem. Neue Folge, Bd. 124, S. 223 - 248 (1981).

Ladungssteuermittel sind in der Literatur zahlreich bekannt. Allerdings weisen die bisher bekannten Ladungssteuermittel eine Reihe von Nachteilen auf, die den Einsatz in der Praxis stark einschränken oder gar unmöglich machen, wie z. B. ungenügende Thermostabilität, Eigengeruch, schlechte Dispergierbarkeit oder geringe Stabilität im Tonerbindemittel (Zersetzung, Migration). Eine besondere Schwäche vieler marktgängiger Ladungssteuermittel ist die ungenügende Wirksamkeit hinsichtlich des gewünschten Vorzeichens der Ladung (positive oder negative Aufladung), Ladungshöhe oder Ladungskonstanz. Ein wichtiger Aspekt ist auch, daß Ladungssteuermittel ökotoxikologisch unbedenklich sein müssen.

Aufgabe der vorliegenden Erfindung war es daher, besonders wirksame und ökotoxikologisch verträgliche Ladungssteuermittel zu finden. Neben dem schnellen Erreichen und der Konstanz der Aufladung sollen die Verbindungen eine hohe Thermostabilität aufweisen. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren gut und unzersetzt dispergierbar sein. Weiterhin sollte ihre Wirkung weitgehend unabhängig von der Harz/Carrier-Kombination sein,

um eine breite Anwendung zu erschließen.

Ebenso sollten sie in gängigen Pulverlack-Bindemitteln und Elektretmaterialien wie z. B. Polyester (PES), Epoxid, PES-Epoxyhybrid, Polyurethan, Acrylsystemen sowie Polypropylenen gut und unzersetzt dispergierbar sein.

Bezüglich ihrer elektrostatischen Effizienz sollten die Ladungssteuermittel bereits bei möglichst geringer Konzentration (1 % oder kleiner) wirksam sein und diese Effizienz in Verbindung mit Ruß oder anderen Farbmitteln nicht verlieren. Von Farbmitteln ist nämlich bekannt, daß sie die triboelektrische Aufladung von Tonern teilweise nachhaltig beeinflussen können.

Überraschenderweise hat sich nun gezeigt, daß spezielle Aluminium-Azokomplexe gute Ladungssteuereigenschaften und hohe Thermostabilität besitzen, wobei die Ladungssteuereigenschaft weder durch Kombination mit Ruß oder anderen Farbmitteln verloren geht. Darüber hinaus sind die Verbindungen mit den üblichen Toner-, Pulverlack- und Elektretbindemitteln gut verträglich und lassen sich leicht dispergieren.

Gegenstand der vorliegenden Erfindung ist die Verwendung der nachfolgenden 2:1-Aluminium-Azokomplexfarbstoffe der Formeln (I) und (I'), einzeln oder in Kombination, als Ladungssteuermittel in elektrophotographischen Tonern und Entwicklern, als Aufladungsverbesserer in Pulverlacken, Elektretmaterialien und in elektrostatischen Trennverfahren sowie in Ink-Jet Tinten und in Farbfiltern,

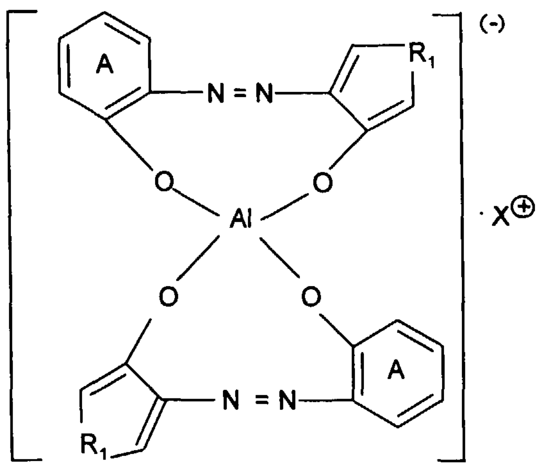

(I)

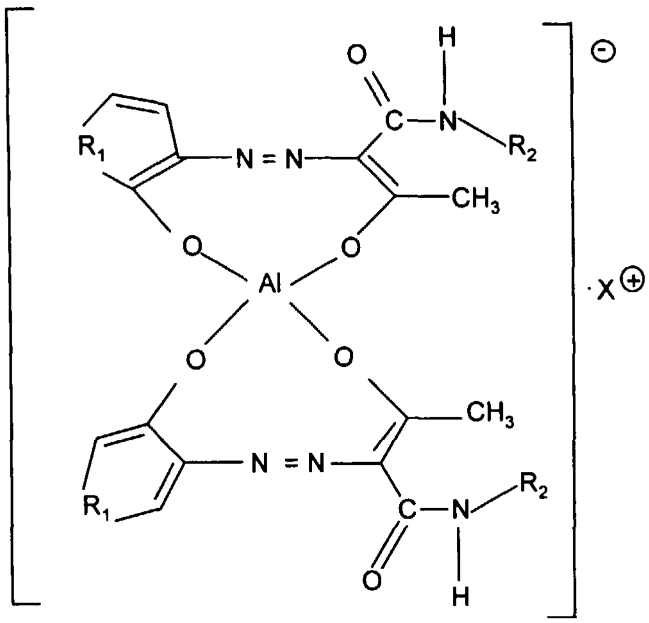

(I'),

worin die Kerne A, unabhängig voneinander, einen oder zwei Substituenten aus der Reihe $C_1$-$C_3$-Alkyl, $C_1$-$C_3$-Alkoxy, Cyano, $C_1$-$C_3$-Alkoxycarbonyl, Benzoyl, Phenoxycarbonyl, Aminocarbonyl, Mono- oder Di($C_1$-$C_4$-alkyl)-aminocarbonyl, Mono- oder Di-($C_1$-$C_3$-alkoxy-$C_2$-$C_4$-alkyl)-aminocarbonyl, Phenylaminocarbonyl, Aminosulfonyl, Mono- oder Di($C_1$-$C_4$-alkyl)-aminosulfonyl, Mono- oder Di-($C_1$-$C_3$-alkoxy-$C_2$-$C_4$-alkyl)-aminosulfonyl und Phenylaminosulfonyl, tragen;

alle $R_1$ unabhängig voneinander, eine zur Vervollständigung eines ein- oder zweikernigen aromatischen Ringsystems notwendige Atomgruppe, die gegebenenfalls Substituenten tragen kann;
die beiden $R_2$ unabhängig voneinander einen gegebenenfalls Substituenten tragenden Phenylrest oder einen $C_1$-$C_{12}$-Alkyl- oder $C_1$-$C_2$-Alkoxy-$C_2$-$C_8$-alkylrest; und $X^+$ ein Kation bedeuten.

Unter ein- oder zweikernigen Systemen aromatischen Charakters sind insbesondere Benzol, Naphthalin und heterocyclische Kerne zu verstehen. Unter den heterocyclischen Kernen sind vor allem die fünfgliedrigen, Stickstoff und/oder Schwefel enthaltenden Ringe, vor allem Pyrazolon oder Pyridon zu verstehen. Als Substituenten an allen Kernen aromatischen Charakters kommen, falls nicht anders angegeben, alle in der Farbstoffchemie bekannten Substituenten in Betracht, z.B. Halogen, worunter vor allem Chlor oder Brom zu verstehen ist, Hydroxy, $C_1$-$C_4$-Alkyl, $C_1$-$C_4$-Alkoxy, Cyan, Nitro, Rhodan, $C_1$-$C_3$-Alkylcarbonyl, Benzoyl, $C_1$-$C_3$-Alkylcarbonyloxy, Aminocarbonyl, Mono- oder Di-($C_1$-$C_4$-alkyl)-aminocarbonyl, Mono- oder Di-($C_1$-$C_3$-alkoxy-$C_2$-$C_3$-alkyl)-aminocarbonyl, $C_1$-$C_3$-Alkoxycarbonyl, Aminosulfonyl, Mono- oder Di-($C_1$-$C_4$-alkyl)-aminosulfonyl und Mono- oder Di-($C_1$-$C_3$-alkoxy-$C_2$-$C_3$-alkyl)-aminosulfonyl. Dieselben Substituenten kommen auch für $R_2$ in Betracht, falls dieses ein Phenylrest ist. Bevorzugt sind in diesem Fall aber Halogenatome, worunter vor allem Chlor und Brom zu verstehen ist, $C_1$-$C_4$-Alkyl, $C_1$-$C_4$-Alkoxy oder Acetyl.
In den Formeln (I) und (I') bedeuten die Symbole $R_1$ die zur Vervollständigung einer Kupplungskomponente notwendigen Atomgruppen; in Formel (I), insbesondere die zur Vervollständigung einer benzolischen oder 1-Phenyl-3-methylpyrazolyl-Kupplungskomponente notwendigen Atomgruppen. In Formel (I') bedeutet $R_1$ vorzugsweise die zur Vervollständigung eines Naphthalin- oder Benzolringes notwendige Atomgruppe. Insbesondere die Benzolkerne können gegebenenfalls Substituenten, z.B. Chlor, Brom, $C_1$-$C_2$-Alkyl, $C_1$-$C_2$-Alkoxy, Carbonamid oder Sulfonamid, tragen.
Als Kation $X^+$ kommen bevorzugt Alkalimetall-Ionen, insbesondere Natrium- oder Kaliumionen, Ammonium-, Mono-, Di- oder Tri-($C_1$-$C_8$)-alkylammonium- und vor allem 4-Amino-, 4-Hydroxy- oder 4-Keto-2,2,6,6-tetramethylpiperidinium-Ionen in Betracht.
Im einzelnen bevorzugte Farbstoffe entsprechen den Formeln (Ia), (Ib) und (Ic)

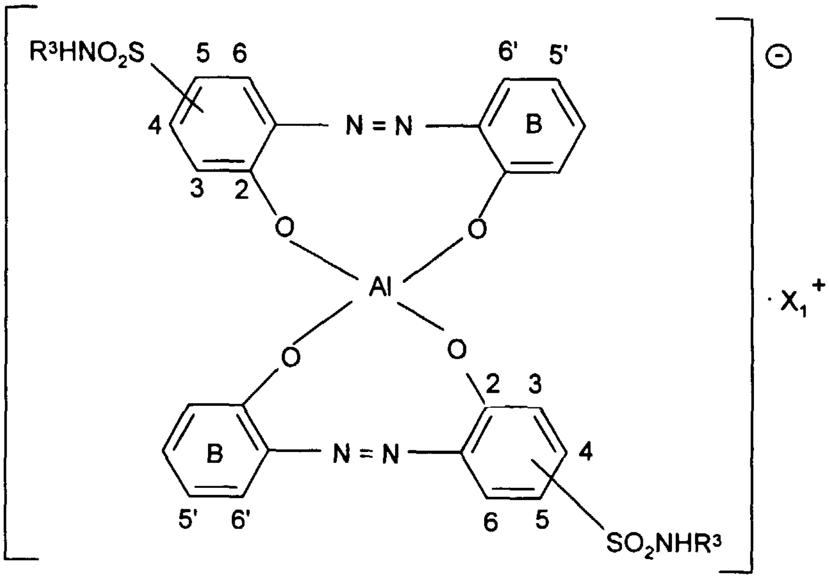

(Ia),

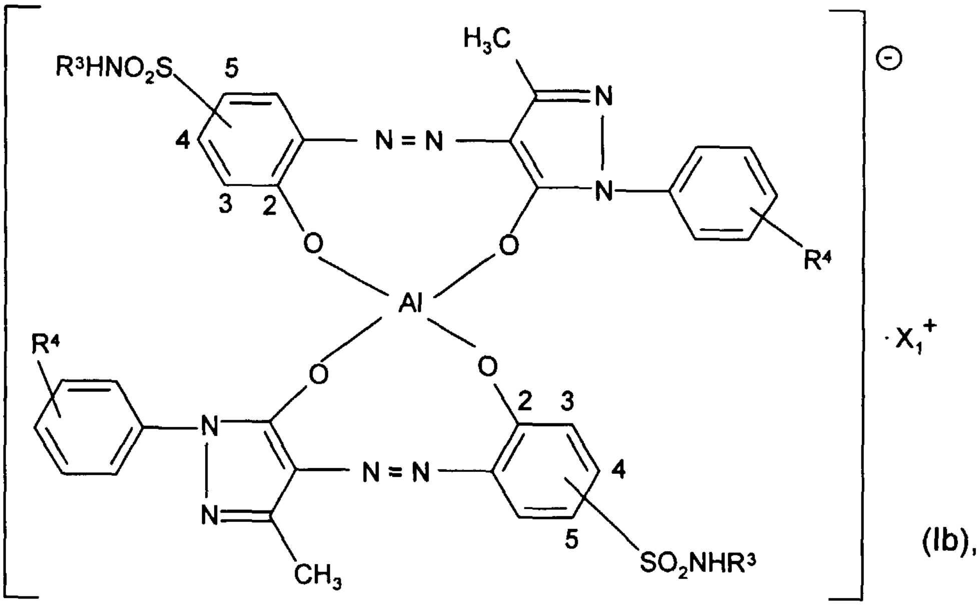

(Ib),

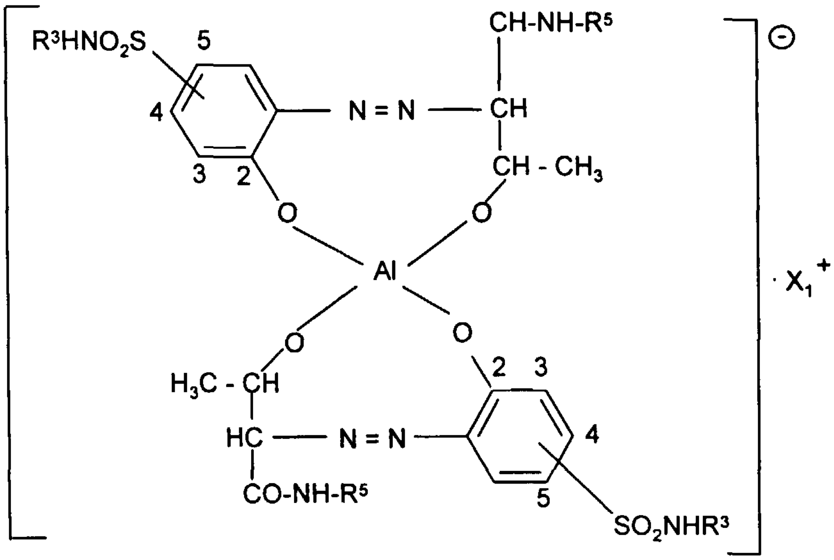

(Ic),

wobei in diesen Formeln, jeweils unabhängig von den anderen Substituenten die beiden $R^3$ Wasserstoff, $C_1$-$C_3$-Alkyl, $C_1$-$C_2$-Alkoxy-$C_2$-$C_3$-alkyl oder Phenyl, insbesondere Methyl, Ethyl, $C_1$-$C_2$-Alkoxy-$C_2$-$C_3$-alkyl oder Phenyl,

$R^4$ Wasserstoff, Halogen, $C_1$-$C_2$-Alkoxy, $C_1$-$C_2$-Alkyl, vorzugsweise Wasserstoff, Chlor oder Methyl, insbesondere Wasserstoff,

die beiden $R^5$ jeweils je einen 2-Ethyl-hexylrest oder einen Phenylrest, der bis zu drei Substituenten tragen kann, darunter bis zu zwei aus der Gruppe Chlor, Brom, $C_1$-$C_2$-Alkyl, $C_1$-$C_3$-Alkoxy oder Acetyl, vorzugsweise eine oder zwei $C_1$-$C_2$-Alkoxygruppen und/oder ein Chlor- oder Bromatom oder eine Methylgruppe, insbesondere eine oder zwei Methoxygruppen und

$X_1^+$ ein Natrium-, Kalium-, Ammonium- oder ($C_1$-$C_4$)-Alkylammonium-ion, insbesondere aber ein 4-Amino-, 4-Hydroxy- oder 4-Keto-2,2,6,6-tetramethylpiperidinium-ion bedeuten,

die beiden Kerne B (Formel Ia) je einen oder zwei Substituenten tragen können, darunter je einen aus der Gruppe Halogen, Hydroxyl, $C_1$-$C_2$-Alkyl, $C_1$-$C_3$-Alkoxy, Acetyl, Benzoyl oder 4,6-Bis-(2',4'-dimethylphenyl)-triazinyl-2, insbesondere je eine Hydroxyl- und eine Acetyl- oder Benzoylgruppe, oder die Kerne B tragen die zur Vervollständigung eines Naphthalinkerns notwendige Atomgruppe, vorzugsweise in 5'- und 6'-Stellung gebunden.

In den Verbindungen der Formeln (Ia), (Ib) und (Ic) sind die Sulfonamidgruppen vorzugsweise jeweils in 4- oder 5-Stellung gebunden.

Die Herstellung der Verbindungen der Formel (I) ist literaturbekannt, beispielsweise aus US-Patent 5,731,422, und erfolgt in Analogie zur Herstellung ähnlicher, bekannter 2:1-Komplexfarbstoffe, durch Kupplung eines diazotierten Amins der Formel (II)

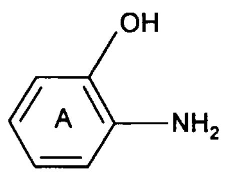

(II)

mit einer Verbindung der Formel (III)

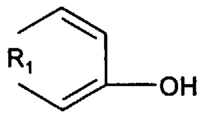

(III).

Die Herstellung der Farbstoffe der Formel (I') erfolgt ebenfalls in Analogie zur Herstellung ähnlicher, bekannter 2:1-Komplexfarbstoffe, durch Kuppeln eines diazotierten Amins der Formel (II')

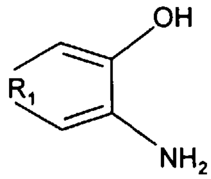

(II')

mit einer Verbindung der Formel (III')

$$H_3C - CO - CH_2 - CO - NHR_2 \qquad (III').$$

Die Metallisierung und die Einführung des Kations kann auf der Stufe der Vorprodukte, d.h. der Verbindungen der Formeln (II), (III), (II') oder (III'), oder der Endprodukte, ebenfalls auf bekannte Weise, durchgeführt werden.

Die erfindungsgemäß verwendeten Aluminium-Azokomplexe können genau auf das jeweilige Harz/Toner-System abgestimmt werden. Hinzu kommt, daß die erfindungsgemäß eingesetzten Verbindungen rieselfähig sind und hohe und besonders konstante Ladungssteuereigenschaften, gute Thermostabilitäten und gute Dispergierbarkeiten besitzen. Ein weiterer technischer Vorteil dieser Verbindungen liegt darin, daß sie sich gegenüber den unterschiedlichen Bindemittelsystemen inert verhalten und somit vielfältig einsetzbar sind, wobei von besonderer Bedeutung ist, daß sie nicht in der Polymermatrix gelöst sind, sondern als kleine, feinstverteilte Festkörper vorliegen.

Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.

Es ist bekannt, daß kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden. Die Ladungssteuermittel-Partikel, die nach der Dispergierung im Bindemittel vorliegen, sollten kleiner als 1 µm, vorzugsweise kleiner als 0,5 µm, sein, wobei eine enge Teilchengrößen-Verteilung von Vorteil ist.

Für die Teilchengröße, definiert durch den $d_{50}$-Wert, finden sich stoffabhängig optimale Wirkbereiche. So sind beispielsweise grobe Teilchen (~ 1 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung und/oder Trocknung möglich. Hierzu bieten sich verschiedene Mahltechniken an. Vorteilhaft sind beispielsweise Luftstrahlmühlen, Schneidmühlen, Hammermühlen, Perlmühlen sowie Prallmühlen.

Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Die erfindungsgemäßen Verbindungen sind durch folgende chemisch/physikalische Eigenschaften gekennzeichnet:

Der Wassergehalt, nach der Karl-Fischer Methode bestimmt, liegt zwischen 0,1 % und 30 %, bevorzugt zwischen 1 und 25 % und besonders bevorzugt zwischen 1 und 20 %, wobei das Wasser adsorbiert und/oder gebunden sein kann, und sich dessen Anteil durch Temperatureinwirkung bis 200°C und Vakuum bis $10^{-8}$ Torr oder durch Wasserzugabe einstellen läßt.

Die Teilchengröße, mittels lichtmikroskopischer Auswertung oder Laserlichtbeugung bestimmt und definiert durch den $d_{50}$-Wert, liegt zwischen 0,01 µm und 1000 µm, bevorzugt zwischen 0,1 und 500 µm und ganz besonders bevorzugt zwischen 0,2 und 400 µm.

Besonders vorteilhaft ist es, wenn durch die Mahlung eine enge Teilchengrößenfraktion resultiert. Bevorzugt ist ein Bereich $\Delta$ ($d_{95}$-$d_{50}$) von kleiner als 500 µm, insbesondere kleiner als 200 µm.

Die erfindungsgemäß eingesetzten Aluminium-Azoverbindungen können auch mit positiv oder negativ steuernden Ladungssteuermitteln kombiniert werden, um gute anwendungstechnische Aufladbarkeiten zu erzielen, wobei die Gesamt-Konzentration dieser Ladungssteuermittel zwischen 0,01 und 50 Gew.-%, bevorzugt zwischen 0,1 und 5 Gew.-% liegt, bezogen auf das Gesamtgewicht des elektrophotographischen Toners, Entwicklers, Pulvers oder Pulverlacks.

Als Ladungssteuermittel kommen beispielsweise in Betracht: Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit dem Farbstoff der Formeln (I) oder (I') kombiniert werden können.
Triarylmethan-Derivate wie beispielsweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum Colour Index Solvent Blue 125, 66 und 124 ganz besonders eignen.
Besonders gut geeignet ist Colour Index Solvent Blue 124 in Form seines hochkristallinen Sulfats oder des Trichlor-triphenylmethyltetrachloraluminats.

Weiterhin geeignet sind Triphenylmethane wie beschrieben in US-A-5 051 585, insbesondere solche der Formel (2)

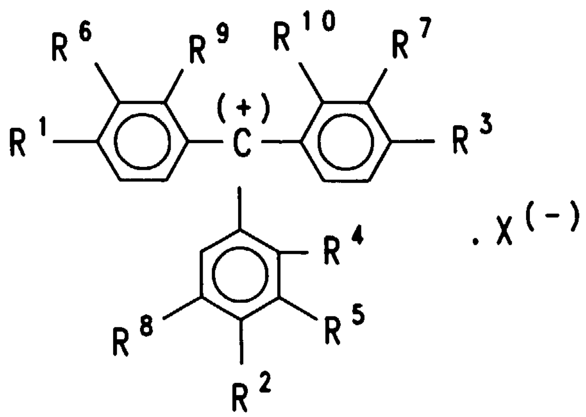

(2)

worin

$R^1$ und $R^3$ gleich oder verschieden sind und $-NH_2$, eine Mono- und Dialkylaminogruppe, deren Alkylgruppen 1 bis 4, vorzugsweise 1 oder 2, C-Atome haben, eine Mono- oder Di-omega-hydroxyalkylaminogruppe, deren Alkylgruppen 2 bis 4, vorzugsweise 2, C-Atome haben, eine gegebenenfalls N-Alkylsubstituierte Phenyl- oder Phenalkylaminogruppe, deren Alkyl 1 bis 4, vorzugsweise 1 oder 2, C-Atome hat, deren Phenalkylgruppe in der aliphatischen Brücke 1 bis 4, vorzugsweise 1 oder 2, C-Atome, hat und deren Phenylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,
$R^2$ Wasserstoff ist oder eine der für $R^1$ und $R^3$ genannten Bedeutungen hat,
$R^4$ und $R^5$ Wasserstoff, Halogen, vorzugsweise Chlor, oder eine Sulfonsäuregruppe bedeutet oder $R^4$ mit $R^5$ zusammen einen ankondensierten Phenylring bildet,
$R^6$, $R^7$, $R^9$ und $R^{10}$ jeweils Wasserstoff oder einen Alkylrest mit 1 oder 2 C-Atomen, vorzugsweise Methyl, bedeu-

ten und

$R^8$ Wasserstoff oder Halogen, vorzugsweise Chlor, ist und

$X^-$ für ein stöchiometrisches Äquivalent eines Anions steht, insbesondere für ein Chlorid-, Sulfat-, Molybdat-, Phosphormolybdat- oder Borat-Anion.

Besonders bevorzugt ist ein Ladungssteuermittel der Formel (2), worin $R^1$ und $R^3$ Phenylaminogruppen, $R^2$ eine m-Methylphenylaminogruppe und die Reste $R^4$ bis $R^{10}$ alle Wasserstoff sind.

Weiterhin geeignet sind Ammonium- und Immoniumverbindungen, wie beschrieben in US-A-5 015 676.

Weiterhin geeignet sind fluorierte Ammonium- und fluorierte Immoniumverbindungen, wie beschrieben in US-A-5 069 994, insbesondere solche der Formel (3)

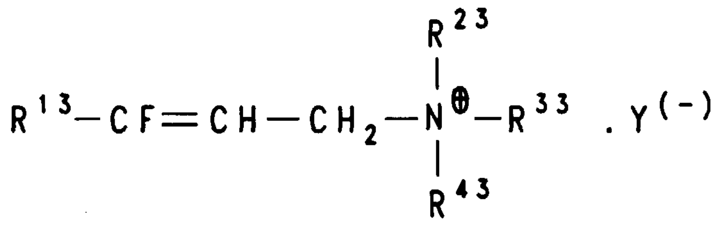

(3)

worin

$R^{13}$ perfluoriertes Alkyl mit 5 bis 11 C-Atomen,

$R^{23}$, $R^{33}$ und $R^{43}$ gleich oder verschieden sind und Alkyl mit 1 bis 5, vorzugsweise 1 bis 2, C-Atomen bedeuten und

$Y^-$ ein stöchiometrisches Äquivalent eines Anions, vorzugsweise eines Tetrafluoroborat- oder Tetraphenylborat-Anions ist.

Vorzugsweise bedeutet

$R^{13}$ perfluoriertes Alkyl mit 5 bis 11 C-Atomen,

$R^{23}$ und $R^{33}$ Ethyl und

$R^{43}$ Methyl.

Weiterhin geeignet sind biskationische Säureamide, wie beschrieben in WO 91/10172, insbesondere solche der Formel (4)

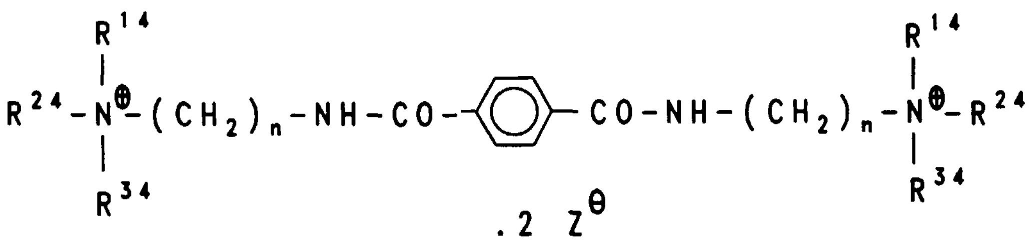

(4)

worin

$R^{14}$, $R^{24}$ und $R^{34}$ gleiche oder verschiedene Alkylreste mit 1 bis 5 C-Atomen, vorzugsweise Methyl, sind,

n für eine ganze Zahl von 2 bis 5 steht, und

$Z^-$ für ein stöchiometrisches Äquivalent eines Anions steht, vorzugsweise für ein Tetraphenylborat-Anion.

Weiterhin geeignet sind Diallylammoniumverbindungen, wie beschrieben in DE-A-4 142 541, insbesondere solche der Formel (5)

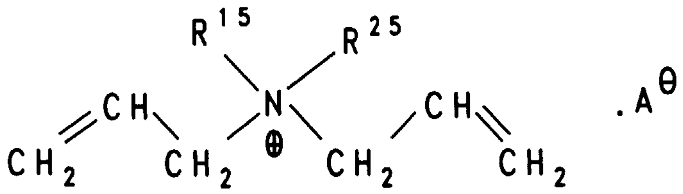

(5)

worin

$R^{15}$ und $R^{25}$ gleiche oder verschiedene Alkylgruppen mit 1 bis 5, vorzugsweise 1 oder 2, C-Atomen bedeuten, insbesondere aber für Methylgruppen stehen und $A^-$ für ein stöchiometrisches Äquivalent eines Anions steht, vorzugsweise für ein Tetraphenylborat-Anion steht, sowie die aus diesen erhältlichen polymeren Ammoniumverbindungen der Formel (6), wie beschrieben in DE-A-4 029 652 oder DE-A-4 103 610,

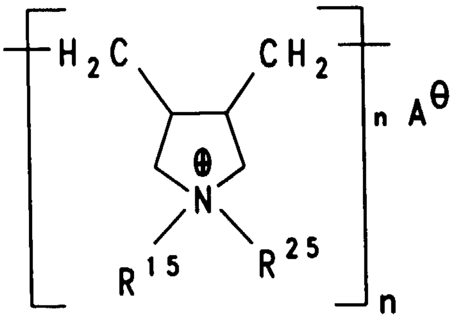

(6)

worin n einen Wert hat, der Molekulargewichten von 5000 bis 500000 g/mol entspricht. Besonders bevorzugt sind jedoch Verbindungen der Formel (6) mit Molekulargewichten von 40000 bis 400000 g/mol.

Weiterhin geeignet sind Arylsulfid-Derivate, wie beschrieben in DE-A-4 031 705, insbesondere solche der Formel (7)

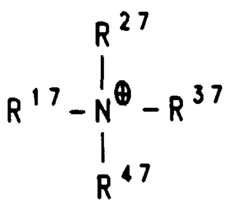

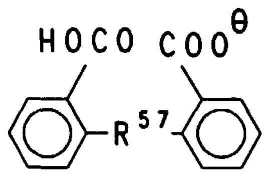

(7)

worin

$R^{17}$, $R^{27}$, $R^{37}$ und $R^{47}$ gleiche oder verschiedene Alkylgruppen mit 1 bis 5, vorzugsweise 2 oder 3, C-Atomen bedeuten, und
$R^{57}$ einer der zweiwertigen Reste -S-, -S-S-, -SO- oder $-SO_2-$ ist. Beispielweise sind $R^{17}$ bis $R^{47}$ Propylgruppen und $R^{57}$ die Gruppe -S-S-.

Weiterhin geeignet sind Phenolderivate, wie beschrieben in EP-A-0 258 651, insbesondere solche der Formel (8)

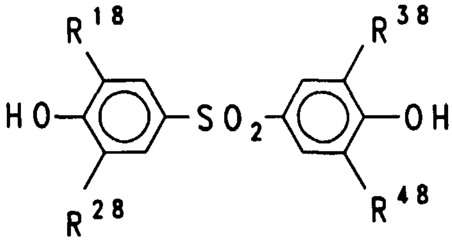

(8)

worin

$R^{18}$ und $R^{38}$ Alkyl- oder Alkenylgruppen mit 1 bis 5, vorzugsweise 1 bis 3, C-Atomen, und $R^{28}$ und $R^{48}$ Wasserstoff oder Alkyl mit 1 bis 3 C-Atomen, vorzugsweise Methyl, bedeuten.

Als Beispiele seien die Verbindungen genannt, in denen $R^{18}$ bis $R^{48}$ Methylgruppen sind oder in denen $R^{28}$ und $R^{48}$ Wasserstoff sind und $R^{18}$ und $R^{38}$ für die Gruppe $-CH_2-CH=CH_2$ stehen.

Weiterhin geeignet sind Phosphoniumverbindungen und fluorierte Phosphoniumverbindungen, wie beschrieben in US-A-5 021 473 und in US-A-5 147 748, insbesondere solche der Formeln (9)

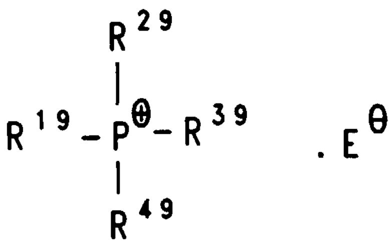

(9)

worin

$R^{19}$, $R^{29}$, $R^{39}$ und $R^{49}$ gleiche oder verschiedene Alkylgruppen mit 1 bis 8, vorzugsweise 3 bis 6, C-Atomen, bedeuten und $E^{\ominus}$ für ein stöchiometrisches Äquivalent eines Anions steht, vorzugsweise für ein Halogenid-Anion; und (10)

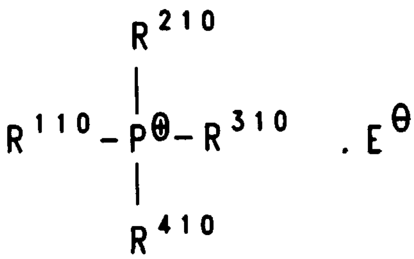

(10)

worin
$R^{110}$ ein hochfluorierter Alkylrest mit 5 bis 15, vorzugsweise 6 bis 10, C-Atomen,
$R^{210}$, $R^{310}$ und $R^{410}$ Alkyl mit 3 bis 10 C-Atomen oder Phenyl sind.

Als Beispiel für eine Verbindung der Formel (9) sei genannt Tetrabutyl-phosphonium-bromid, als Beispiele für Verbindungen der Formel (10) seien genannt die Verbindungen mit $R^{110} = C_8F_{17}-CH_2-CH_2-$, $R^{210}=R^{310}=R^{410}$ = Phenyl

und $E^{\ominus} = PF^{\ominus}_6$ oder das Tetraphenylborat-Anion.

Weiterhin geeignet sind Calix(n)arene, wie beschrieben in EP-A-0 385 580, insbesondere solche der Formel (11a) und (11b)

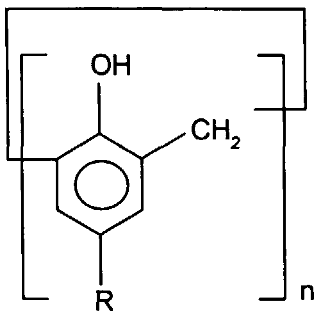

(11a)

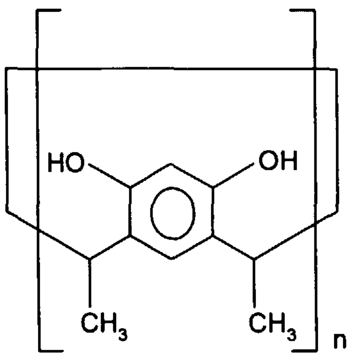

(11b)

worin

n eine Zahl von 3 bis 12 ist und
R für Wasserstoff, Halogen, vorzugsweise Chlor, geradkettiges oder verzweigtes Alkyl mit 1 bis 12 C-Atomen, Aralkyl, z.B. Benzyl oder Phenethyl,
$-NO_2$, $-NH_2$ oder $NHR^{111}$ steht, wobei $R^{111}$ Alkyl mit 1 bis 8 C-Atomen, gegebenenfalls $C_1$-$C_4$-alkylsubstituiertes Phenyl oder $-Si(CH_3)_3$ bedeutet.

Weiterhin geeignet sind Benzimidazolone, wie beschrieben in EP-A-0 347 695, insbesondere solche der Formel (12)

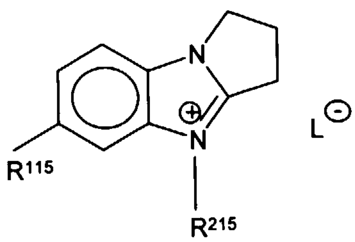

(12)

worin

$R^{115}$ ist ein Alkyl mit 1 bis 5 C-Atomen und $R^{215}$ ein Alkyl mit 1 bis 12 C-Atomen und L ein stöchiometrisches Äquivalent eines Anions, insbesondere ein Chlorid- oder Tetrafluoborat-Anion.

Als Beispiel sei die Verbindung mit $R^{115}= CH_3$ und $R^{215} = C_{11}H_{23}$ genannt.

Weiterhin geeignet sind ringförmig verknüpfte Oligosaccharide, wie beschrieben in DE-A-4 418 842, insbesondere solche der Formel (13)

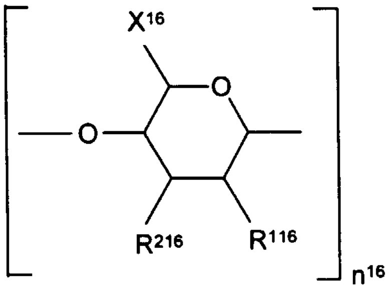

(13)

worin $n^{16}$ eine Zahl zwischen 3 und 100 ist, $R^{116}$ und $R^{216}$ die Bedeutung OH, $OR^{316}$, wobei $R^{316}$ substituiertes oder unsubstituiertes Alkyl-($C_1$-$C_{18}$), Aryl-($C_6$-$C_{12}$) oder Tosyl bedeuten, und $X^{16}$ die Bedeutung $CH_2OH$ oder $CH_2COR^{316}$ hat. Als Beispiele seien genannt:

$n^{16}$= 6, $R^{116}$ und $R^{216}$ = OH, $X^{16} = CH_2OH$
$n^{16}$ = 7, $R^{116}$ und $R^{216}$ = OH, $X^{16} = CH_2OH$
$n^{16}$ = 8, $R^{116}$ und $R^{216}$ = OH, $X^{16} = CH_2OH$.

Weiterhin geeignet sind Polymersalze, wie beschrieben in DE-A-4 332 170, deren anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist

und deren kationische Komponente Wasserstoffatome oder Metallkationen sind.

Weiterhin geeignet sind Cyclooligosaccharid-Verbindungen, wie sie beispielsweise in der DE-A-197 11 260 beschrieben sind, die durch Umsetzung eines Cyclodextrins oder Cyclodextrin-Derivates mit einer Verbindung der Formel

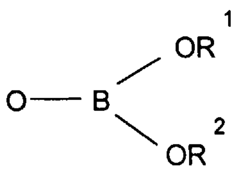

erhältlich sind, worin $R^1$ und $R^2$ Alkyl, bevorzugt $C_1$-$C_4$-Alkyl, bedeuten.

Weiterhin geeignet sind Inter-Polyelektrolyt-Komplexe, wie sie beispielsweise in der DE-A-197 32 995 beschrieben sind.

Weiterhin geeignet, insbesondere für Flüssigtoner, sind oberflächenaktive, ionische Verbindungen und sogenannte Metallseifen.

Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons Oloa 1200).

Weiterhin geeignet sind Soyalecithin und N-Vinylpyrrolidon-Polymere. Weiterhin geeignet sind Natriumsalze von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-p-toluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoleat, Calziumstearat, Eisennaphthalit und Zinknaphthalit.

Weiterhin geeignet sind Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die erfindungsgemäß verwendeten Aluminium-Azokomplexe der Formel (I) oder (I') und gegebenenfalls zusätzliche Ladungssteuermittel werden einzeln oder in Kombination miteinander in einer Konzentration von 0,01 bis 50 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers bzw. in das Medium einer Ink-Jet Tinte oder die Filtermaterialien homogen, beispielsweise durch Extrudieren oder Einkneten, Perlmahlen oder mit Ultraturrax (Schnellrührer) eingearbeitet. Dabei können die erfindungsgemäß eingesetzten Verbindungen als getrocknete und gemahlene Pulver, Dispersionen oder Lösungen, Preßkuchen, Masterbatches, Präparationen, angeteigte Pasten, als auf geeignete Träger, wie z. B. Kieselgel, $TiO_2$, $Al_2O_3$ oder Ruß, aus wäßriger oder nicht-wäßriger Lösung aufgezogene Verbindungen oder mit solchen Trägern vermischt oder in sonstiger Form zugegeben werden. Ebenso können die erfindungsgemäß verwendeten Verbindungen grundsätzlich auch schon bei der Herstellung der jeweiligen Bindemittel zugegeben werden, d. h. im Verlauf von deren Polymerisation, Polyaddition oder Polykondensation.

Gegenstand der vorliegenden Erfindung ist auch ein elektrophotographischer Toner, enthaltend ein übliches Bindemittel, beispielsweise ein Styrol-, Styrolacrylat-, Styrolbutadien-, Acrylat-, Acryl-, Polyester- oder Epoxidharz oder eine Kombination der letzten beiden, und 0,01 bis 50 Gew.-%, vorzugsweise 0,5 bis 20 Gew.-%, besonders bevorzugt 0,1 bis 5 Gew.-%, jeweils bezogen auf das Gesamtgewicht des elektrophotographischen Toners, mindestens einer Aluminum-Azoverbindung der Formel (I) oder (I'), gegebenenfalls in Kombination mit einem oder mehreren der beschriebenen zusätzlichen Ladungssteuermittel.

Gegenstand der vorliegenden Erfindung ist auch ein Pulverlack, enthaltend ein übliches Bindemittel, beispielsweise ein Urethan-, Acryl-, Polyester- oder Epoxidharz oder eine Kombination davon, und 0,01 bis 50 Gew.-%, vorzugsweise 0,5 bis 20 Gew.-%, besonders bevorzugt 0,1 bis 5 Gew.-%, jeweils bezogen auf das Gesamtgewicht des Pulverlacks mindestens einer Aluminum-Azoverbindung der Formel (I) oder (I'), gegebenenfalls in Kombination mit einem oder mehreren der beschriebenen zusätzlichen Ladungssteuermittel.

Weiterhin wurde gefunden, daß die Aluminium-Azoverbindungen der Formel (I) oder (I') als Farbmittel in Ink-Jet-Tinten auf wäßriger (Mikroemulsionstinten) und nichtwäßriger ("solvent-based") Basis, sowie in solchen Tinten, die nach dem Hot-melt-Verfahren arbeiten, geeignet sind.

Mikroemulsionstinten basieren auf organischen Lösemitteln, Wasser und ggf. einer zusätzlichen hydrotropen Substanz (Grenzflächenvermittler). Tinten auf nichtwäßriger Basis enthalten im wesentlichen organische Lösemittel und ggf. eine hydrotrope Substanz.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Gegenstand der Erfindung ist auch eine Hot-Melt Ink-Jet-Tinte, bestehend im wesentlichen aus 20 bis 90 Gew.-% Wachs und 1 bis 10 Gew.-% der Aluminium-Azoverbindung der Formel (I) oder (I'). Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

Gegenstand der vorliegenden Erfindung sind auch Ink-Jet-Aufzeichnungsflüssigkeiten, welche einen oder mehrere der Aluminium-Azoverbindungen der Formel (I) oder (I') enthalten.
Die fertigen Aufzeichnungsflüssigkeiten enthalten im allgemeinen insgesamt 0,5 bis 15 Gew.-%, vorzugsweise 1,5 bis 8 Gew.-%, (trocken gerechnet) eines oder mehrerer, z.B. 2 oder 3, der Verbindungen der Formel (I) oder (I').

Mikroemulsionstinten enthalten 0,5 bis 15 Gew.-%, vorzugsweise 1,5 bis 8 Gew.-%, einer Verbindung der Formel (I) oder (I'), 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% einer Verbindung der Formel (I) oder (I'), 85 bis 94,5 Gew.-% organisches Lösungsmittel und/oder hydrotrope Verbindungen.
Zur Herstellung der Aufzeichnungsflüssigkeiten benutztes Wasser wird vorzugsweise in Form von destilliertem oder entsalztem Wasser eingesetzt.

Bei den in den Aufzeichnungsflüssigkeiten enthaltenen Lösungsmitteln kann es sich um ein organisches Lösungsmittel oder um ein Gemisch derartiger Lösungsmittel handeln. Geeignete Lösungsmittel sind beispielsweise

ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butyl-ether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Als hydrotrope Verbindungen, die gegebenenfalls auch als Lösungsmittel dienen, können beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Die erfindungsgemäßen Ink-Jet-Tinten können hergestellt werden, indem die Aluminium-Azoverbindung der Formel (I) oder (I') als Pulver, als Präparation, als Suspension oder als Preßkuchen in das Mikroemulsionsmedium oder in das nichtwäßrige Medium oder in das Wachs zur Herstellung einer Hot-Melt Ink-Jet-Tinte eindispergiert wird. Der Preßkuchen kann auch ein hochkonzentrierter, insbesondere sprühgetrockneter, Preßkuchen, sein.

Darüber hinaus ist der Metallkomplex der Formel (I) und (I') auch geeignet als Farbmittel für Farbfilter, sowohl für die subtraktive wie für die additive Farberzeugung (P. Gregory "Topics in Applied Chemistry: High Technology Application of Organic Colorants" Plenum Press, New York 1991, S. 15 - 25).

In den nachfolgenden Beispielen bedeuten Teile Gewichtsteile und Prozent Gewichtsprozent.

Beispiele

Herstellungsbeispiele für Aluminium-Azokomplex-Verbindungen

Herstellungsbeispiel 1

26,0 Teile 2-Aminophenol-4-(3'-methoxypropylaminosulfonyl) werden in einem Gemisch aus 200 Teilen Wasser und 70 Teilen HCl 30 % verrührt. Nach Zugabe von 50 Teilen Eis wird das Amin durch Zugabe von 26,2 Volumenteilen 4n $NaNO_2$-Lösung diazotiert. Man rührt die entstandene Suspension 3 Stunden bei 0°C und läßt sie danach langsam zu einer Lösung von 13,7 Teilen β-Naphthol in 190 Teilen Wasser und 9,5 Teilen NaOH-Lösung 30 % zulaufen. Durch gleichzeitige Zugabe weiterer 70 Teile NaOH-Lösung 30 % wird der pH-Wert bei 9,5 bis 10 gehalten. Das so erhaltene Gemisch wird sodann 8 Stunden bei Raumtemperatur gerührt, dann mit HCl 30 % auf pH 1,5 gestellt, der entstandene Monoazofarbstoff der Formel

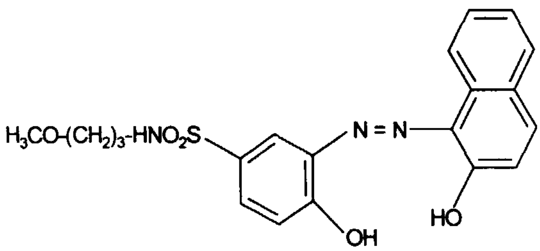

abfiltriert, mit 4000 Teilen Wasser gewaschen und getrocknet.

44,19 Teile des Monoazofarbstoffs werden in einem Gemisch aus 110 Teilen Wasser und 25 Teilen 30 %iger NaOH-Lösung suspendiert, auf 70°C erwärmt und 1 Stunde verrührt. Der pH-Wert der Suspension ist 12,3. Nach weiterem Erwärmen auf 90°C wird, im Verlaufe von 1 Stunde, eine Lösung von 17,1 Teilen Aluminiumsulfat (wasserfrei) in

340 Teilen Wasser zugefügt, wobei eine voluminöse Suspension des Aluminiumkomplexes entsteht und der pH-Wert auf 10,9 sinkt. Man läßt unter 2-stündigem Rühren die Temperatur auf 45°C absinken und versetzt die Suspension langsam mit einer Lösung von 8,58 Teilen Triacetondiamin in 10 Teilen Wasser und 11,2 Teilen HCl 30 %. Der entstandene Niederschlag wird mit ca. 2,4 Teilen HCl 30 % auf pH 5,4 gestellt, eine weitere Stunde bei Raumtemperatur gerührt, filtriert, der Rückstand mit Wasser salzfrei gewaschen, getrocknet und auf einer geeigneten Mühle gemahlen. Man erhält so den Farbstoff der Formel (Ia), worin $R^3$ Methoxypropyl bedeutet, der Kern B Naphthylen ist und die Sulfonamidgruppe jeweils in 5-Stellung gebunden ist.

Charakterisierung

Rotblaues Pulver

| | |
|---|---|
| DTA: | Erweichung bei 160 - 185°C, Zersetzung ab 250°C |
| pH: | 8,7 |
| Leitfähigkeit | 400 µS/cm |
| Restfeuchte | 5,1 % (IR-Lampe) |
| ε (1 KHz) | 6 |
| tanδ (1 KHz) | 0,3 |
| Ωcm | $8 \cdot 10^{12}$ Ωcm |
| Kristallinität | kristallin, zahlreiche scharfe Reflexionspeaks zwischen 2 Theta 5° und 2 Theta 35° (Hauptpeaks: 21,7° und 8,7°) |
| Teilchengrößenverteilung: | $d_{50}$ < 10 µm |

Herstellungsbeispiel 2

Analog zur Arbeitsweise des Herstellungsbeispiels 1 werden äquimolare Mengen (12,12 Teile) 2-Hydroxy-4-methylaminosulfonyl-anilin diazotiert, mit 10,45 Teilen 1-Phenyl-3-methylpyrazolon-5 gekuppelt, mit Aluminiumsulfat, 30 %iger Natronlauge und Triacetondiaminchlorhydrat zum entsprechenden 2:1-Aluminium-Komplexfarbstoff der Formel (Ib), worin $R^3$ Methyl und $R^4$ Wasserstoff bedeuten und die Sulfonamidgruppe in 4-Stellung gebunden ist, umgesetzt.

Charakterisierung

Gelbrotes Pulver

| | |
|---|---|
| DTA: | Erweichung bei 200 - 210°C, Zersetzung ab 260°C |
| pH: | 7,5 |
| Leitfähigkeit | 500 µS/cm |
| Restfeuchte | 6,6 % (IR-Lampe) |
| ε (1 KHz) | 8,7 |
| tanδ (1 KHz) | 0,2 |
| Ωcm | $2 \cdot 10^{11}$ Ωcm |
| Kristallinität | kristallin, zahlreiche scharfe Banden zwischen 2 Theta 5° und 2 Theta 35° (Hauptpeaks: 11,1° sowie 14,4° und 17,7°) |
| Teilchengrößenverteilung: | $d_{50}$ < 10 µm. |
| IR-Spektrum: | 1587, 1568, 1474, 1303 $cm^{-1}$. |

Anwendungsbeispiele

Anwendungsbeispiel 1.1

1 Teil der Verbindung aus Herstellungsbeispiel 1 wird mittels eines Kneters innerhalb von 30 Min. in 95 Teile eines Tonerbindemittels (Polyester auf Bisphenol-A-Basis, ®Almacryl T500) homogen eingearbeitet. Anschließend wird auf einer Labor-Universalmühle gemahlen und dann auf einem Zentrifugalsichter klassifiziert. Die gewünschte

Teilehenfraktion (4 bis 25 µm) wird mit einem Carrier aktiviert, der aus mit Silikon beschichteten Ferrit-Teilchen der Größe 50 bis 200 µm (Schüttdichte 2,75 g/$cm^3$) besteht. (FBM 96-100; Fa. Powder Techn.)

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei ca. 50 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 5 Min. | -22 |
| 10 Min. | -25 |
| 30 Min. | -25 |
| 2 Std. | -25 |
| 24 Std. | -22 |

Anwendungsbeispiel 1.2

Es wird wie in Anwendungsbeispiel 1.1 verfahren, wobei, anstelle von einem Teil, fünf Teile der Verbindung aus Herstellungsbeispiel 1 eingearbeitet werden. In Abhängigkeit von der Aktivierdauer werden folgende q/m-Werte [µC/g] gemessen:

| Aktivierdauer | Aufladung q/m (µC/g] |
|---|---|
| 5 Min. | -35 |
| 10 Min. | -34 |
| 30 Min. | -29 |
| 2 Std. | -22 |
| 24 Std. | -18 |

Anwendungsbeispiel 1.3

1 Teil der Verbindung aus Herstellungsbeispiel 1 wird wie in Anwendungsbeispiel 1.1 in ein Tonerharz eingearbeitet und vermessen, wobei jedoch an Stelle des Polyesterharzes ein Styrol-Acrylat-Copolymer 60:40 (®Dialec S309, Fa. Diamond Shamrock) als Tonerbindemittel, und als Carrier mit Styrol-Methacryl-Copolymerisat (90:10) beschichtete Magnetitteilchen der Größe 50 - 200 µm (90 µm Xerographic Carrier, Plasma Materials Inc., NH, USA) eingesetzt werden.

In Abhängigkeit von der Aktivierdauer werden folgende q/m-Werte gemessen:

| Aktivierdauer | q/m [µC/g] |
|---|---|
| 5 Min. | -12 |
| 10 Min. | -25 |
| 30 Min. | -44 |
| 2 Std. | -55 |
| 24 Std. | -55 |

Anwendungsbeispiel 1.4

Es wird wie in Anwendungsbeispiel 1.3 verfahren, wobei anstelle von 1 Teil lediglich 0,5 Teile der Verbindung aus Herstellungsbeispiel 1 eingesetzt werden. In Abhängigkeit von der Aktivierdauer werden folgende q/m-Werte gemessen:

| Aktivierdauer | q/m [µC/g] |
|---|---|
| 5 Min | -13 |
| 10 Min | -15 |
| 30 Min | -34 |
| 2 Std. | -40 |
| 24 Std. | -40 |

Anwendungsbeispiel 1.5

Es wird wie in Anwendungsbeispiel 1.3 verfahren, wobei zu dem einen Teil der Verbindung aus Herstellungsbeispiel 1 noch 5 Teile Ruß (®Mogul L, Cabot, siehe Vergleichsbeispiel A) eingearbeitet werden.
In Abhängigkeit von der Aktivierdauer werden folgende q/m Werte gemessen:

| Aktivierdauer | q/m [µC/g] |
|---|---|
| 5 Min | -20 |
| 10 Min | -23 |
| 30 Min | -25 |
| 2 Std. | -25 |
| 24 Std. | -22 |

Anwendungsbeispiel 1.6

1 Teil der Verbindung aus Herstellungsbeispiel 2 wird, wie in Anwendungsbeispiel 1.1 beschrieben, in 99 Teile eines Pulverlackbindemittels auf Basis eines carboxylhaltigen Polyesterharzes, z.B. ®Crylcoat 430 (UCB, Belgien), homogen eingearbeitet.
Zur Bestimmung der Abscheidequote werden 50 g des Testpulverlackes mit einem definierten Druck durch eine Tribopistole versprüht. Durch Differenzwiegung läßt sich die abgeschiedene Pulverlackmenge bestimmen und eine Abscheidequote in % definieren, sowie durch die Ladungsübertragung ein Stromfluß [µA] abgreifen.

| Druck [bar] | Strom [µA] | Abscheidequote [%] |
|---|---|---|
| 5 | 0,6 | 75 |
| 3 | 0,4 | 55 |

Vergleichsbeispiel

Zur Bestimmung der Abscheidequote des reinen Pulverlackbindemittels ®Crylcoat 430 wird wie oben beschrieben verfahren, ohne jedoch einen Zusatzstoff einzukneten.

| Druck [bar] | Strom [µA] | Abscheidequote [%] |
|---|---|---|
| 3 | 0,1 | 5 |

Anwendungsbeispiel 1.7

6 Teile der Verbindung aus Herstellungsbeispiel 1 werden unter Rühren (Flügelrührer oder Dissolver) in 94 Teile Methylethylketon gelöst.
Die so erhaltene Ink-Jet-Tinte hat die Zusammensetzung

6 Teile Verbindung aus Herstellungsbeispiel 1
94 Teile Methylethylketon.

Anwendungsbeispiel 1.8

5 Teile der Verbindung aus Herstellungsbeispiel 1 werden in 30 Teilen Glykolether (Dowanol EPh, Fa. Dow Chemical) unter Rühren gelöst.
Anschließend gibt man diese Lösung unter Rühren in eine Lösung von 50 Teilen deionisiertem Wasser mit 15 Teilen Xylol-Sulfonat.
Die so erhaltene Mikroemulsionstinte hat die Zusammensetzung

30 Teile Glykolether
5 Teile Verbindung aus Herstellungsbeispiel 1
15 Teile Xylolsulfonat (Grenzflächenvermittler, Hydrotrope Substanz)
50 Teile Deionisiertes Wasser.

Anwendungsbeispiel 2.1

Es wird wie in Anwendungsbeispiel 1.1 verfahren, wobei anstelle eines Teiles der Verbindung aus Herstellungsbeispiel 1, nunmehr 1 Teil der Verbindung aus Herstellungsbeispiel 2 eingearbeitet wurde.
In Abhängigkeit von der Aktivierdauer werden folgende q/m-Werte gemessen:

| Aktivierdauer | q/m [µC/g] |
|---|---|
| 5 Min | -17 |
| 10 Min | -17 |
| 30 Min | -17 |
| 2 Std. | -18 |
| 24 Std. | -16 |

Anwendungsbeispiel 2.2

Es wird wie in Anwendungsbeispiel 1.3 verfahren, wobei anstelle von einem Teil der Verbindung aus Herstellungsbeispiel 1, nunmehr 1 Teil der Verbindung aus Herstellungsbeispiel 2 eingearbeitet wurde.
In Abhängigkeit von der Aktivierdauer werden folgende q/m-Werte gemessen:

| Aktivierdauer | Aufladung q/m [µC/g] |
|---|---|
| 5 Min | -15 |

(fortgesetzt)

| Aktivierdauer | Aufladung q/m [µC/g] |
|---|---|
| 10 Min | -30 |
| 30 Min | -48 |
| 2 Std. | -48 |
| 24 Std. | -39 |

Anwendungsbeispiel 2.3

Es wird wie in Anwendungsbeispiel 2.2 verfahren, wobei anstelle von einem Teil lediglich 0,5 Teile der Verbindung aus Herstellungsbeispiel 2 eingearbeitet werden. In Abhängigkeit von der Aktivierdauer werden folgende q/m-Werte gemessen:

| Aktivierdauer | Aufladung q/m [µC/g] |
|---|---|
| 5 Min | -13 |
| 10 Min | -20 |
| 30 Min | -36 |
| 2 Std. | -40 |
| 24 Std. | -31 |

Anwendungsbeispiel 2.4

Es wird wie in Anwendungsbeispiel 2.2 verfahren, wobei zu dem einen Teil der Verbindung aus Herstellungsbeispiel 2 noch 5 Teile Ruß (Mogul L. Cabot, siehe Vergleichsbeispiel A) eingearbeitet werden.
In Abhängigkeit von der Aktivierdauer werden folgende q/m-Werte gemessen:

| Aktivierdauer | q/m [µC/g] |
|---|---|
| 5 Min | -30 |
| 10 Min | -40 |
| 30 Min | -40 |
| 2 Std. | -36 |
| 24 Std. | -20 |

Anwendungsbeispiel 2.5

Es wird wie in Anwendungsbeispiel 2.2 verfahren, wobei zu dem einen Teil der Verbindung aus Herstellungsbeispiel 2 noch 5 Teile eines Farbmittels mit elektrostatischem positiven triboelektrischen Eigeneffekt (C.I. Solvent Blue 125, siehe Vergleichsbeispiel B) eingearbeitet wurden.
In Abhängigkeit von der Aktivierdauer werden folgende q/m-Werte gemessen:

| Aktivierdauer | Aufladung q/m [µC/g] |
|---|---|
| 5 Min | -5 |

(fortgesetzt)

| Aktivierdauer | Aufladung q/m [µC/g] |
|---|---|
| 10 Min | -4 |
| 30 Min | -3 |
| 2 Std. | -4 |
| 24 Std. | -5 |

Der hohe positive triboelektrische Eigeneffekt von C.I. Solvent Blue 125 kann durch Zugabe von 1 Teil der Verbindung aus Herstellungsbeispiel 2 deutlich nach negativ umgepolt werden, wobei die negative Aufladung dann auch noch eine verblüffend gute Ladungskonstanz in Abhängigkeit von der Aktivierdauer aufweist.

Anwendungsbeispiele 2.6

6 Teile der Verbindung aus Herstellungsbeispiel 2 werden unter Rühren in 94 Teilen Methylisobutylketon gelöst.
Die so erhaltene Ink-Jet-Tinte hat die Zusammensetzung

6 Teile Verbindung aus Herstellungsbeispiel 2
94 Teile Methylisobutylketon

Anwendungsbeispiel 2.7

3 Teile der Verbindung aus Herstellungsbeispiel 2 werden in 15 Teilen Glykolether (Dowanol EPh) unter Rühren gelöst.
Anschließend gibt man diese Lösung unter Rühren in eine Lösung von 74 Teilen deionisiertem Wasser mit 15 Teilen Xylol-Sulfonat (Fa. Witco Surfactants, Deutschland).
Die so erhaltene Mikroemulsionstinte hat die Zusammensetzung

15 Teile Glykolether
3 Teile Verbindung aus Herstellungsbeispiel 2
8 Teile Xylolsulfonat
74Teile Deionisiertes Wasser.

Vergleichsbeispiel A: zu Anwendungsbeispiel 1.5 und 2.4

Es wird wie in Anwendungsbeispiel 1.3 verfahren, wobei, anstelle von 1 Teil der Verbindung aus Herstellungsbeispiel 1, fünf Teile Ruß Mogul L. Cabot eingearbeitet werden.
In Abhängigkeit von der Aktivierdauer werden folgende q/m-Werte gemessen:

| Aktivierdauer | Aufladung q/m [µC/g] |
|---|---|
| 5 Min | -16 |
| 10 Min | -16 |
| 30 Min | -15 |
| 2 Std. | -9 |
| 24 Std. | +3 |

Es zeigt sich, daß der eingesetzte Ruß die negative Aufladung nach positiv verschiebt.

Vergleichsbeispiel B zu Anwendungsbeispiel 2.5

Es wird wie in Anwendungsbeispiel 1.3 beschrieben, verfahren, wobei, anstelle eines Teiles der Verbindung aus Herstellungsbeispiel 1, fünf Teile C.I. Solvent Blue 125 eingearbeitet werden.
In Abhängigkeit von der Aktivierdauer werden folgende q/m-Werte gemessen:

| Aktivierdauer | Aufladung q/m [µC/g] |
|---|---|
| 5 Min | -29 |
| 10 Min | -28 |
| 30 Min | -19 |
| 2 Std. | -8 |
| 24 Std. | +9 |

Der ausgeprägte positive triboelektrische Eigeneffekt des blauen Farbmittels ist deutlich erkennbar.

**Patentansprüche**

1. Verwendung von 2:1-Aluminium-Azokomplexfarbstoffen der Formeln (I) und (I') einzeln oder in Kombination, als Ladungssteuermittel in elektrophotographischen Tonern und Entwicklern, als Aufladungsverbesserer in Pulverlakken, Elektretmaterialien und in elektrostatischen Trennverfahren sowie in Ink-Jet Tinten und in Farbfiltern,

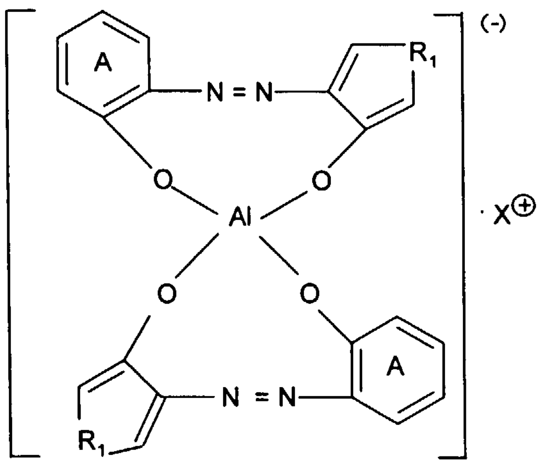

(I)

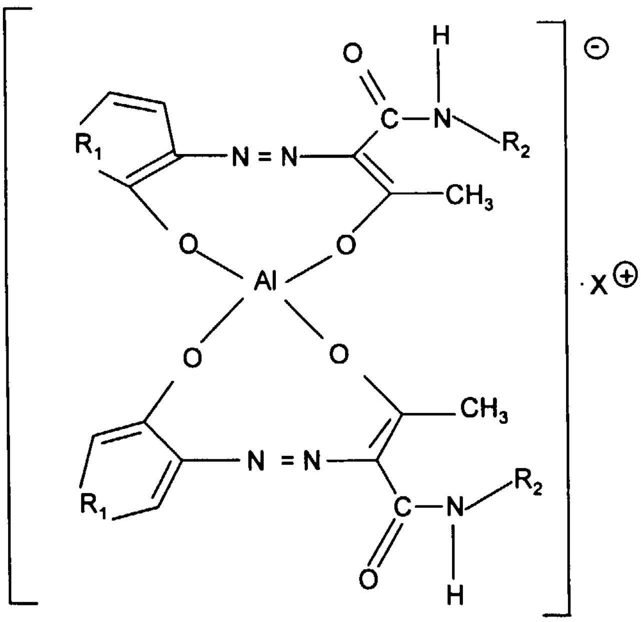

(I'),

worin die Kerne A, unabhängig voneinander, einen oder zwei Substituenten aus der Reihe $C_1$-$C_3$-Alkyl, $C_1$-$C_3$-Alkoxy, Cyano, $C_1$-$C_3$-Alkoxycarbonyl, Benzoyl, Phenoxycarbonyl, Aminocarbonyl, Mono- oder Di($C_1$-$C_4$-alkyl)-aminocarbonyl, Mono- oder Di-($C_1$-$C_3$-alkoxy-$C_2$-$C_4$-alkyl)-aminocarbonyl, Phenylaminocarbonyl, Aminosulfonyl, Mono- oder Di($C_1$-$C_4$-alkyl)-aminosulfonyl, Mono- oder Di-($C_1$-$C_3$-alkoxy-$C_2$-$C_4$-alkyl)-aminosulfonyl und Phenylaminosulfonyl, tragen;

alle $R_1$ unabhängig voneinander, eine zur Vervollständigung eines ein- oder zweikernigen aromatischen Ringsystems notwendige Atomgruppe, die gegebenenfalls Substituenten tragen kann;
die beiden $R_2$ unabhängig voneinander einen gegebenenfalls Substituenten tragenden Phenylrest oder einen $C_1$-$C_{12}$-Alkyl- oder $C_1$-$C_2$-Alkoxy-$C_2$-$C_8$-alkylrest; und $X^+$ ein Kation bedeuten.

**2.** Verwendung nach Anspruch 1, dadurch gekennzeichnet, daß der 2:1-Aluminium-Azokomplexfarbstoff die Formel

(Ia), (Ib) oder (Ic) hat,

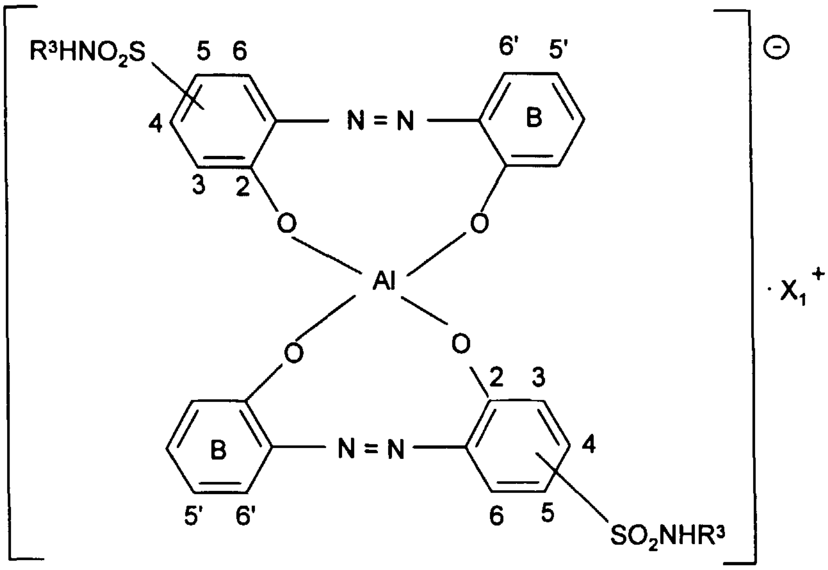

(Ia),

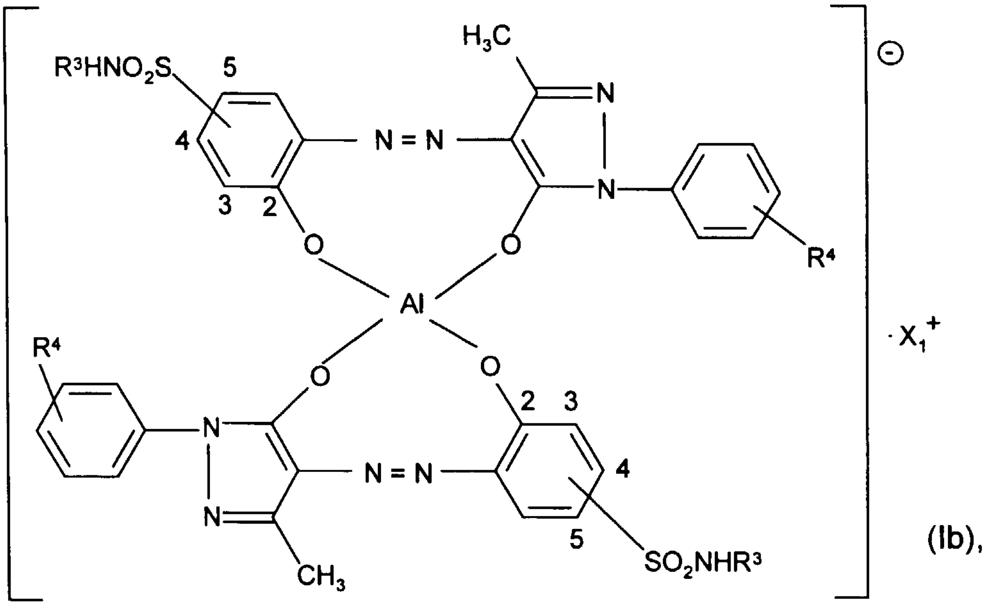

(Ib),

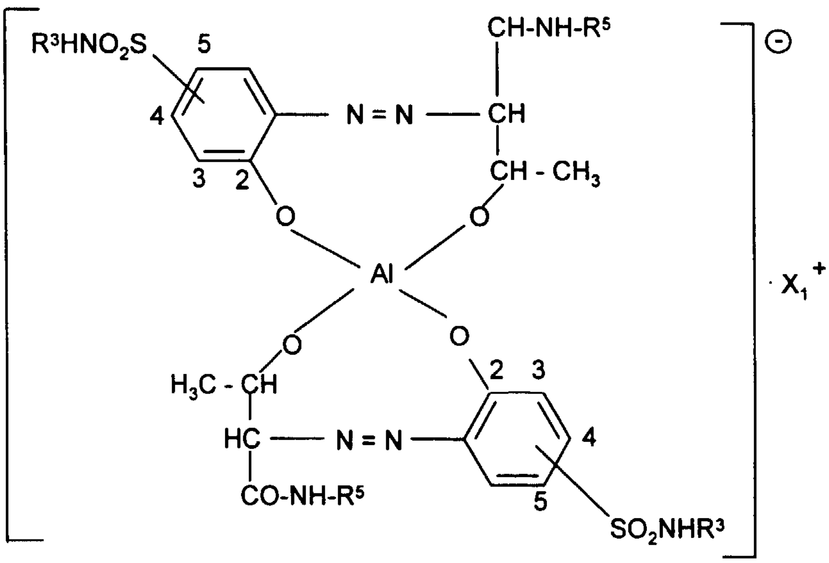

(Ic),

wobei in diesen Formeln, jeweils unabhängig von den anderen Substituenten die beiden $R^3$ Wasserstoff, $C_1$-$C_3$-Alkyl, $C_1$-$C_2$-Alkoxy-$C_2$-$C_3$-alkyl oder Phenyl;

$R^4$ Wasserstoff, Halogen, $C_1$-$C_2$-Alkoxy oder $C_1$-$C_2$-Alkyl;
die beiden $R^5$ jeweils je einen 2-Ethyl-hexylrest oder einen Phenylrest, der bis zu drei Substituenten tragen kann, darunter bis zu zwei aus der Gruppe Chlor, Brom,
$C_1$-$C_2$-Alkyl, $C_1$-$C_3$-Alkoxy oder Acetyl;
$X_1^+$ ein Natrium-, Kalium-, Ammonium- oder ($C_1$-$C_4$)-Alkylammonium-ion, bedeuten, und wobei
die beiden Kerne B in der Formel (Ia) je einen oder zwei Substituenten tragen können, darunter je einen aus der Gruppe Halogen, Hydroxyl, $C_1$-$C_2$-Alkyl, $C_1$-$C_3$-Alkoxy, Acetyl, Benzoyl oder 4,6-Bis-(2',4'-dimethylphenyl)-triazinyl-2, oder die Kerne B tragen die zur Vervollständigung eines Naphthalinkerns notwendige Atomgruppe,

vorzugsweise in 5'- und 6'-Stellung gebunden.

**3.** Verwendung nach Anspruch 2, dadurch gekennzeichnet, daß die Gruppen der Formel $SO_2NHR^3$ in den Verbindungen der Formel (Ia), (Ib) und (Ic) in 4- oder 5-Position stehen.

**4.** Verwendung nach mindestens einem der Ansprüche 1 bis 3, dadurch gekennzeichnet, daß das Kation $X^+$ oder $X_1^+$ 4-Amino-2,2,6,6-tetramethyl-piperidinium, 4-Hydroxy-2,2,6,6-tetramethylpiperidinium oder 4-Keto-2,2,6,6-tetramethyl-piperidinium ist.

**5.** Verwendung nach mindestens einem der Ansprüche 1 bis 4 in Kombination mit einem weiteren positiv oder negativ steuernden Ladungssteuermittel.

**6.** Verwendung nach Anspruch 5, dadurch gekennzeichnet, daß das weitere Ladungssteuermittel aus der Gruppe der Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Benzimidazolone; Azine, Thiazine oder Oxazine ist.

**7.** Verwendung nach mindestens einem der Ansprüche 1 bis 6, dadurch gekennzeichnet, daß die Gesamtkonzentration an 2:1-Aluminium-Azokomplexfarbstoff der Formel (I) oder (I') und gegebenenfalls zugesetzten weiteren Ladungssteuermitteln 0,01 bis 50 Gew.-%, vorzugsweise 0,1 bis 5 Gew.-%, bezogen auf die Gesamtmischung des elektrophotographischen Toners, Entwicklers, Pulverlacks, Elektretmaterials oder Ink-Jet-Tinte ist.

**8.** Elektrophotographische Toner, enthaltend eine Aluminium-Azoverbindung der Formel (I) oder (I') gemäß einem oder mehreren der Ansprüche 1 bis 4 und gegebenenfalls ein oder mehrere positiv oder negativ steuernde Ladungssteuermittel in einer Konzentration von 0,01 bis 50 Gew.-%, vorzugsweise 0,5 bis 20 Gew.-%, bezogen auf das Gesamtgewicht des Toners, sowie ein übliches Tonerbindemittel.

**9.** Pulverlack, enthaltend eine Aluminium-Azoverbindung der Formel (I) oder (I') gemäß einem oder mehreren der Ansprüche 1 bis 4 und gegebenenfalls ein oder mehrere positiv oder negativ steuernde Ladungssteuermittel in einer Konzentration von 0,01 bis 50 Gew.-%, vorzugsweise 0,5 bis 20 Gew.-%, bezogen auf das Gesamtgewicht des Pulverlacks, sowie ein übliches Pulverlackbindemittel.

**10.** Ink-Jet-Aufzeichnungsflüssigkeit, enthaltend 0,5 bis 15 Gew.-% einer Aluminium-Azoverbindung der Formel (I) oder (I') gemäß einem oder mehreren der Ansprüche 1 bis 4.

**11.** Ink-Jet-Aufzeichnungsflüssigkeit nach Anspruch 10, enthaltend 5 bis 99 Gew.-% Wasser und 0,5 bis 94,5 Gew.-% organisches Löungsmittel und gegebenenfalls eine hydrotrope Verbindung.

**12.** Ink-Jet-Aufzeichnungsflüssigkeit nach Anspruch 10, enthaltend 85 bis 94,5 Gew.-% organisches Lösungsmittel und gegebenenfalls eine hydrotrope Verbindung.

**13.** Holt-melt Ink-Jet-Tinte, bestehend im wesentlichen aus 20 bis 90 Gew.-% Wachs, das zwischen 60 und 140°C schmilzt, und 1 bis 10 Gew.-% der Aluminium-Azoverbindung der Formel (I) oder (I') gemäß einem oder mehreren der Ansprüche 1 bis 4.